# EUROPEAN PATENT SPECIFICATION

(11) **EP 0 472 734 B1**
(45) Date of publication and mention of the grant of the patent: **02.01.1997**
(21) Application number: 91904819.9
(22) Date of filing: 04.03.1991
(51) Int. Cl.: G06F 17/60, B65G 1/04

(54) **AUTOMATIC CONVEYING SYSTEM OF PRODUCTS**
AUTOMATISCHE PRODUKTFÖRDERANLAGE
SYSTEME DE TRANSFERT AUTOMATIQUE DE MARCHANDISE

(30) Priority: 15.03.1990 JP 62708/90
(43) Date of publication of application: 04.03.1992
(73) Proprietor: FUJITSU LIMITED, Kawasaki-shi, Kanagawa 211 (JP)
(72) Inventor: TSURUMOTO, Shinsaku, Oyama-shi-Tochigi 323 (JP); TATENO, Harunobu, 441, Sakaue, Kaminokawamachi, Tochigi 329-06 (JP); GAMO, Mineo, Yuki-shi,Ibaraki 307 (JP); KAKIZAWA, Sadao, Utsunomiya-shi-Tochigi 321-01 (JP); KOBAYASHI, Katsuji, Oyama-shi-Tochigi 323 (JP)
(74) Representative: Lehn, Werner, Dipl.-Ing.
(86) International application number: JP9100287
(87) International publication number: WO9113819

(56) References cited:
- EP-A- 0 260 086
- EP-A- 0 265 626
- JP-A- 6 347 206
- JP-A-60 193 022
- JP-A-62 218 393
- JP-A-63 155 308
- IBM TECHNICAL DISCLOSURE BULLETIN. vol. 27, no. 6, November 1984, NEW YORK US pages 3332 - 3334 N.A. SWENSON, JR. 'Improved AGVS Work Station'

## Description

### TECHNICAL FIELD

The present invention relates to an automatic product conveying system in a factory.

### BACKGROUND ART

In general, a production control system is composed of a process controller which connects plural work stations with a warehouse through a conveyance means such as, for example, an unmanned automatic conveyance car and controls the work stations; a conveyance controller for controlling the conveyance means; and a host computer which performs the exchange of information between it and the said controllers and gives instructions to the controllers on the basis of a work plan and a process procedure. A production control system called FMS (Flexible Manufacturing System) has realized a production system capable of coping with multi-variety, small lot production wherein predetermined works are performed while various products are flowing through work stations in accordance with a predetermined procedure.

In such production control system, a carrier receives products at a certain work station and conveys the products to another work station along a conveyance path, in which station there is effected a desired work such as inspection for example. Between the carrier which travels by itself on the conveyance path and each work station there is provided a station conveyor for the reception and delivery of products between the carrier and each work station. According to the prior art, when loading and unloading of products are to be performed using one station conveyor, a control system for the carrier and a control system for the station conveyor are linked together and a distinction is made between the loading of products to the carrier and the unloading of products from the carrier.

Unless the carrier control system and the station conveyor control system are linked together, an empty loading may be done when product is to be loaded to the carrier, or another product is already present on the station conveyor side when product is to be unloaded from the carrier, which may cause collision of the products with each other on the station conveyor. However, linking the carrier control system and the station conveyor control system with each other gives rise to the problem that the control systems become complicated, resulting in an increase of cost.

Products are stored in a warehouse and taken out from the warehouse in accordance with a predetermined work plan, but since processing machines and testing apparatus which constitute each work station continue to operate in accordance with a predetermined sequence, so the product delivery timing in taking out product from the warehouse is controlled strictly. This is because once the product delivery timing is disordered, the product processing and testing operations are discontinued. In the conventional systems, therefore, a warehousing port for storing product into a warehouse from the carrier and a delivery port for taking out product from the warehouse and loading it onto the carrier are provided separately between a conveyance path along which the carrier travels by itself and the warehouse, and the operation of the warehousing port and that of the delivery port are controlled by a host computer.

Consequently, in the conventional systems the equipment cost is high and the host computer is required to have both a program for warehousing and a program for delivery.

For solving the above problem, one will easily hit upon the idea of using a port in common for both warehousing and delivery. However, if there is adopted a buffer as such a common port, there newly arises the following problem at the time of concurrence between a product to be warehoused and a product for delivery. Since the collision of the products is to be avoided, the unloading of the product for delivery onto the conveyance path is delayed eventually. Such a delay of the product for delivery impedes the working efficiency of the processing machines and testing apparatus waiting for the supply of product without letup.

EP-A-0 265 626 relates to a method and an apparatus to control storage and retrieval systems. In particular, data blocks which simulate pans or pallets of articles to be stored and retrieved can be entered into the system as well as operating information like available storage locations, speed of the conveyor, positioning of cranes etc. and modified as desired. The system outputs can then be examined to see the effects of changes.

EP-A-0 260 086 deals with a control system for high volume manufacturing installation which comprises a control computer, a plurality of workstations, a plurality of control devices for determining the status of each of the plurality of workstations, and a bidirectional multiplexer system connected to the control computer and to said plurality of control devices for polling said control devices, storing status data from each of said control devices and transferring said status data on demand to said control computer in a sequence predetermined as a function of the relative positions of said plurality of workstations.

Accordingly, it is an object of the present invention to provide an automatic product conveying system of a simple construction which permits the reception and delivery of products between a carrier and each work station, using a single station conveyor, without linking a carrier control system and a station conveyor control system with each other and without causing collision of products.

It is another object of the present invention to provide an automatic product conveying system which, at the time of concurrence of a product for warehousing and a product for delivery, permits quick delivery of the product while avoiding collision of both products, in the case where there is adopted a buffer as a common port for both warehousing and delivery ports between a conveyance path and a warehouse.

These objects are achieved by a system according to claim 1. Further advantageous embodiments are detailed in the subclaims.

### DISCLOSURE OF THE INVENTION

In one aspect of the present invention there is provided an automatic product conveying system for conveying products between plural work stations and a product warehouse, including an annular conveyance path provided along the work stations and the product warehouse; a carrier for conveying products along the annular conveyance path; station conveyor means for conveying products from the work stations to the carrier or from the carrier to the work stations; first control means for controlling the operation of the station conveyor means; buffer means disposed between the product warehouse and the conveyance path for the reception and delivery of products between the product warehouse and the carrier; first communication means for the communication of information on the loading and unloading of products between the carrier and the station conveyor means; second communication means for the communication of information on the loading and unloading of products between the carrier and the buffer means; first detector means for detecting the presence of a product on the station conveyor means; and second detector means for detecting the presence of a product which has been unloaded onto the station conveyor means from the carrier.

Preferably, the first communication means comprises first and second light emitting elements provided on the carrier, first and second light sensing elements provided on each station conveyor, third and fourth light emitting elements provided on the station conveyor, and third and fourth light sensing elements provided on the carrier. The first light emitting element outputs an unloading request signal, and the second light emitting elements outputs a loading request signal. On the other hand, the third light emitting element outputs an OK signal in accordance with the unloading request signal when there is no product on the station conveyor means and the fourth light emitting element outputs a loading OK signal in accordance with the loading request signal when the presence of product has been detected by the first detector means and the presence of unloaded product not detected by the second detector means.

Preferably, the buffer means comprises first conveyor means having first and second conveyors disposed in parallel, the first conveyor means being capable of moving between a first position in which the first conveyor occupies predetermined product loading/unloading position and a second position in which the second conveyor occupies the predetermined product loading/unloading position, and a second conveyor means for the reception and delivery of products between the first conveyor means and the warehouse.

According to the present invention, since there is provided the first communication means, e.g. optical communication means, of a simple construction for the communication of information between the carrier and the station conveyor means, it is possible to effect loading and unloading of products with respect to the carrier without collision of the products on the station conveyor means.

Moreover, since the buffer means comprising the foregoing first and second conveyor means is disposed between the conveyance path and the warehouse, even when a product for delivery from the warehouse and a product for storage into the warehouse concur with each other on the buffer means, it is possible to carry the products quickly out of and into the warehouse while avoiding their collision.

### BRIEF DESCRIPTION OF THE DRAWINGS

Fig. 1 is a schematic construction diagram of an automatic product conveying system according to an embodiment of the present invention;
Fig. 2 is a schematic construction diagram showing the exchange of signals between a carrier and a station conveyor in the embodiment;
Figs. 3(a) to 3(d) are explanatory views explaining product unloading operations from the carrier to a work station;
Figs. 4(a) to 4(d) are explanatory views explaining product loading operations from the work station to the carrier;
Figs. 5(a) to 5(j) are explanatory views explaining continuous product unloading and loading operations;
Fig. 6 is a timing chart showing operation timings of the operations illustrated in Figs. 5(a) to 5(j);
Fig. 7 is a schematic diagram showing a construction of buffer means used in the embodiment; and
Figs. 8(a) to 8(g) are explanatory views explaining operations of the buffer means.

### BEST MODE FOR CARRYING OUT THE INVENTION

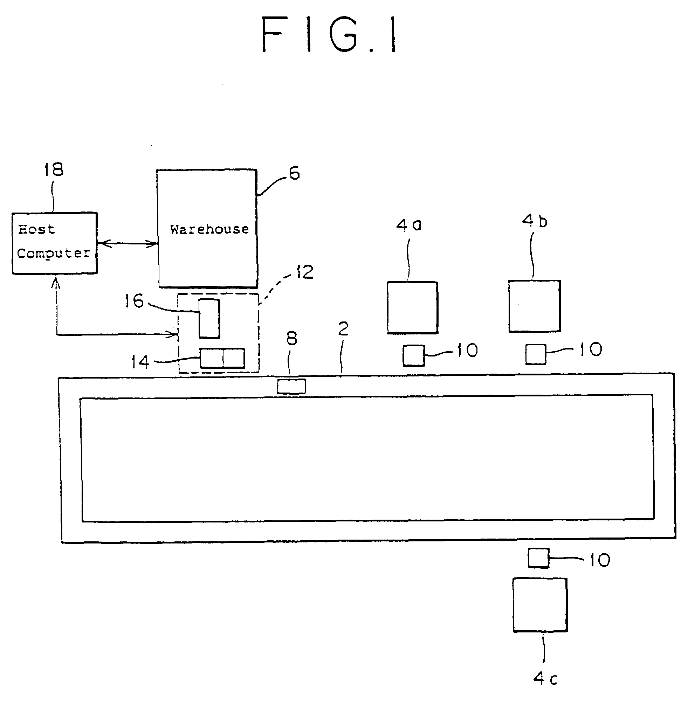

Referring to Fig. 1, there is schematically illustrated an automatic product conveying system according to an embodiment of the present invention. Along an annular conveyance path 2 there are disposed plural work stations 4a, 4b, 4c and a warehouse 6 for temporary storage of products. The work stations 4a to 4c each comprise a processing machine for applying some processing to products and a testing apparatus for testing the products. Reference numeral 8 denotes a carrier such as, for example, an unmanned automatic conveyance car for conveying product along the conveyance path 2.

Between the conveyance path 2 and each of the work stations 4a, 4b, 4c there is provided a station conveyor 10, while between the conveyance path 2 and the warehouse 6 there is provided a buffer mechanism 12. The buffer mechanism 12 comprises a parting conveyor 14 capable of moving right and left and a stock conveyor 16 for the reception and delivery of products between the warehouse 6 and the parting conveyor 14. The warehouse 6 and the operation of the buffer mechanism 12 are controlled by a host computer 18.

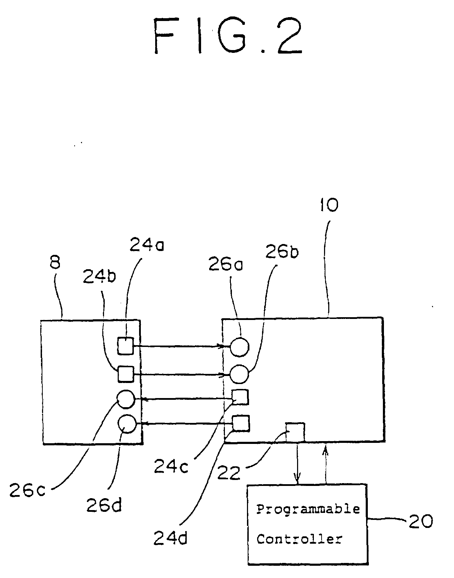

Referring to Fig. 2, there is illustrated a construction of an optical communication apparatus used in this embodiment for the exchange of information between the carrier 8 and each station conveyor 10. The operation of the station conveyor 10 is controlled by a programmable controller 20. On the station conveyor 10 there is provided a product sensor 22 for detecting whether a product is present on the station conveyor. For example, the product sensor 22 is constituted by a transmission type photosensor.

On the carrier 8 there are provided a first LED 24a which issues an unloading request signal for unloading product from the carrier 8 and a second LED 24b which issues a loading request signal for loading product onto the carrier 8. The station conveyor 10 is provided with first and second photodiodes 26a, 26b for receiving the unloading request signal and the loading request signal from the first and second LEDs 24a, 24b, respectively.

The station conveyor 10 is further provided with a third LED 24c which issues an unloading OK signal in accordance with the unloading request signal when there is no product on the station conveyor, and a fourth LED 24d which issues a loading OK signal in accordance with the loading request signal provided from the second LED 24b when presence of the product has been detected by the product sensor 22 and there is no unloaded product unloaded from the carrier 8 on the station conveyor 10.

On the carrier 8 side there are further provided third and fourth photodiodes 26c, 26d for receiving the unloading OK signal from the third LED 24c and the loading OK signal from the fourth LED 24d, respectively.

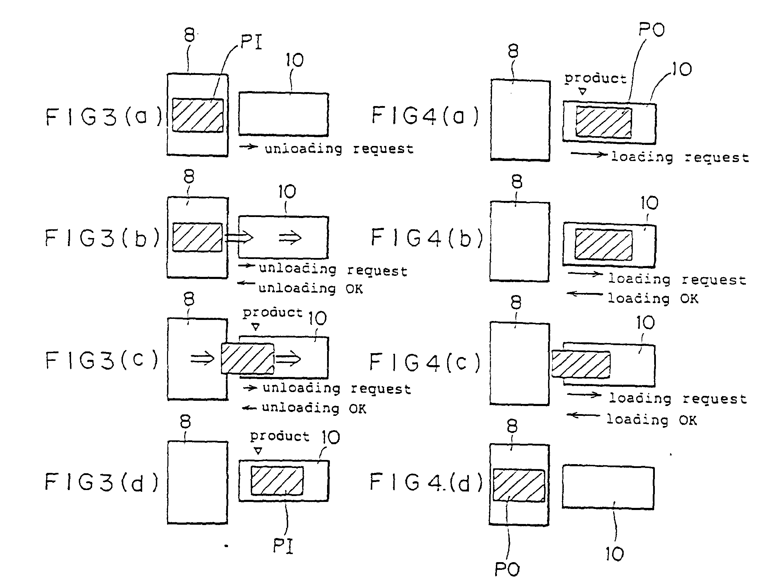

Referring now to Figs. 3(a) to 3(d), product unloading operations from the carrier to a work station in this embodiment will be described below.

The carrier 8 detects a stop position opposed to a desired work station and stops automatically. When the carrier 8 issues an unloading request signal for the unloading of product PI as shown in Fig. 3(a), the station conveyor 10 side issues an unloading OK signal if there is no product on the conveyor as shown in Fig. 3(b). Upon receipt of the unloading OK signal on the carrier 8 side, the product PI is unloaded from the carrier 8 onto the station conveyor 10 as shown in Fig. 3(c). When the product sensor 22 of the station conveyor 10 detects the product PI, the issuance of the unloading request signal and that of the unloading OK signal are terminated after the lapse of a predetermined time. The state at the end of issuance of the unloading OK signal is as shown in Fig. 3(d). An unloaded product flag is turned on by the programmable controller 20 of the station conveyor 10, and it turns off when the unloading operation for the product PI is over and the product PI is no longer present on the station conveyor 10.

Thus, even when an unloading request signal is issued, the carrier 8 does not unload the product PI unless it receives an unloading OK signal from the station conveyor 10, whereby the collision of products on the station conveyor 10 is prevented.

Now, operations for loading product PO onto the carrier 8 will be described below with reference to Figs. 4(a) to 4(d).

When the carrier 8 issues a loading request signal as shown in Fig. 4(a), the station conveyor 10 issues a loading OK signal as shown in Fig. 4(b) only when the unloaded product flag is not ON and the product sensor 22 detects the product PO. Once the loading OK signal is issued from the station conveyor 10, the station conveyor is driven and the product PO is thereby loaded onto the carrier 8 as shown in Fig. 4(c). When the product PO is loaded onto the carrier 8, the issuance of the loading request signal and that of the loading OK signal are terminated and the loading operation is completed, as shown in Fig. 4(d).

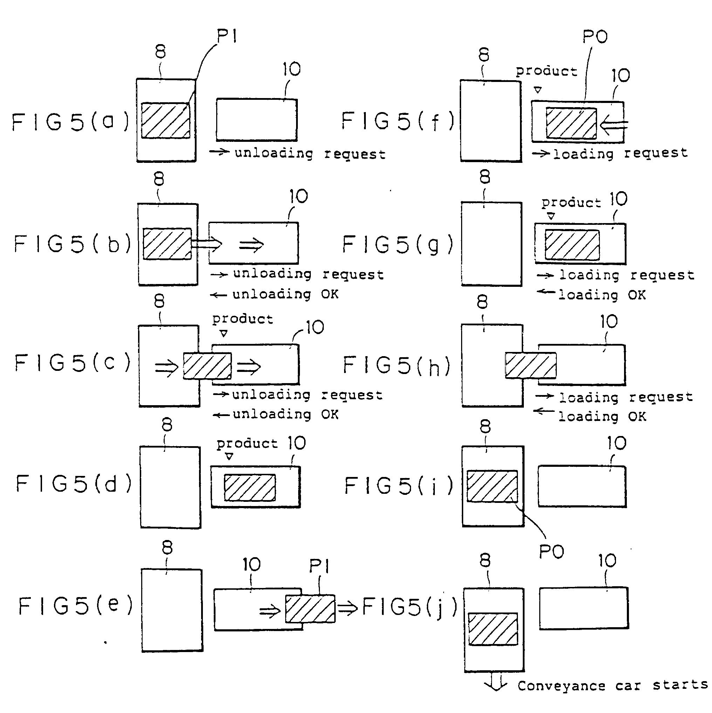

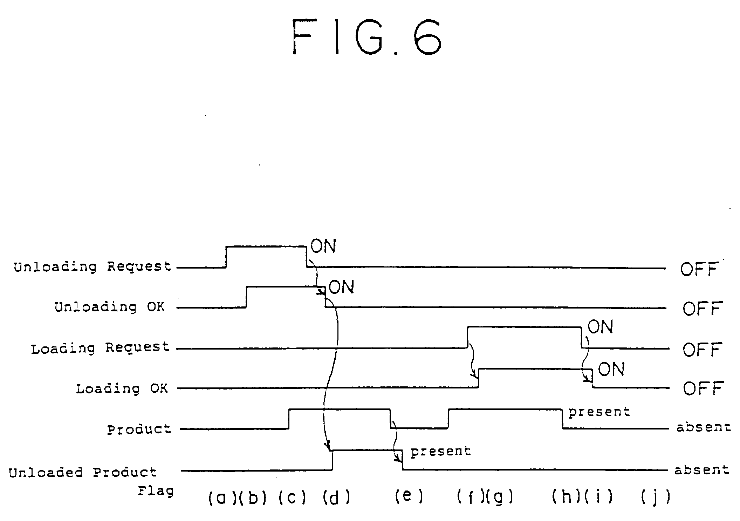

Next, continues operations involving unloading of product from the carrier and loading of product to the carrier will be described below with reference to Figs. 5(a) to 5(j) and Fig. 6. In the timing chart of Fig. 6, times (a) to (j) correspond to the states of Figs. 5(a) to 5(j), respectively.

Figs. 5(a) to 5(d) are substantially the same as Figs. 3(a) to 3(d) and illustrate unloading operations for product PI from the carrier 8. Fig. 5(e) illustrates the product PI being taken up from the station conveyor 10 by a worker and transferred to the work station. When the product PI unloading operation is over as shown in Fig. 5(d), the carrier 8 issues a loading request signal after the lapse of a predetermined time. During this predetermined time, the product PI is unloaded from the station conveyor 10 and product PO for loading to the carrier 8 is put on the station conveyor 10.

The loading operations illustrated in Figs. 5(f) to 5(i) are substantially the same as in Figs. 4(a) to 4(d). Since the unloaded product flag is provided in this embodiment, if the product PI unloaded from the carrier 8 is not taken out from the station conveyor 10 within the predetermined time, the flag is ON when a loading request signal is issued from the carrier 8 after the lapse of the predetermined time, so a loading OK signal will never be issued from the station conveyor 10, whereby a malfunction of loading the product PI once unloaded from the carrier 8 again onto the carrier 8 is prevented completely. When the product PO loading operation is over, the carrier 8 loaded with the product PO moves toward the next work station or the warehouse 6 as shown in Fig. 5(j).

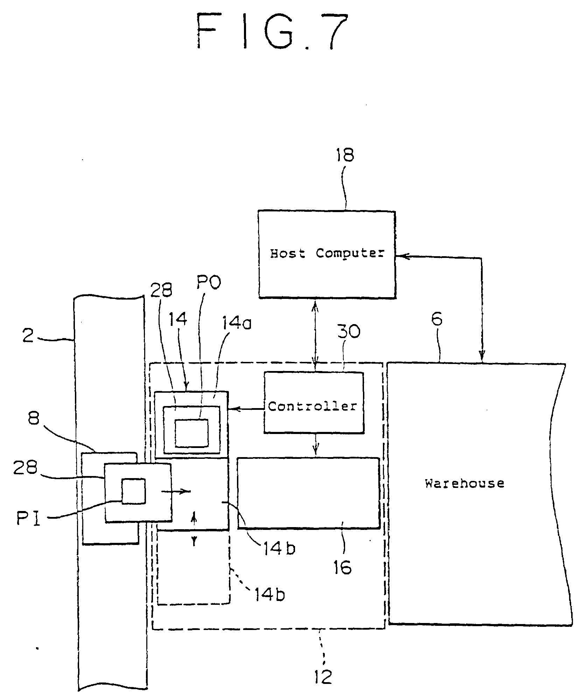

Now, the buffer mechanism 12 disposed between the conveyance path 2 and the warehouse 6 will be described with reference to Fig. 7. The buffer mechanism 14 comprises a parting conveyor 14 having a first conveyor 14a and a second conveyor 14b, a stock conveyor 16 for the reception and delivery of products between the parting conveyor 14 and the warehouse 6; and a controller 30 for controlling both the parting conveyor 14 and the stock conveyor 16.

The parting conveyor 14 is movable between a first position in which the second conveyor 14b occupies the broken line position in the figure and the first conveyor 14a occupies a product reception/delivery position aligned with the stock conveyor 16, and a second position indicated by the solid line in Fig. 7 in which the second conveyor 14b occupies the product reception/delivery position. The product PI for warehousing and the product PO for delivery are conveyed while each being carried on a pallet 28. According to the state illustrated in the figure, the parting conveyor 14 has been moved to the second position to retract the delivery product PO on the first conveyor 14a, permitting the warehousing product PI to be transferred from the carrier 8 onto the second conveyor 14b.

The host computer 18 transmits to the controller 30 a warehousing command signal SI and a delivery command signal SO for instructing the warehouse 6 to perform warehousing and delivery. The controller 30 in turn transmits to the host computer 18 a warehousing product signal TI and a delivery product signal TO respectively indicating the presence of a product for warehousing and that of a product for delivery on the buffer mechanism 12. From the carrier 8 there is issued to the buffer mechanism 12 an arrival signal RCH indicating that the carrier has reached the front of the buffer mechanism 12, while from the buffer mechanism 12 there is issued to the carrier 8 a work end signal END indicating that the product PO for delivery has been loaded onto the carrier.

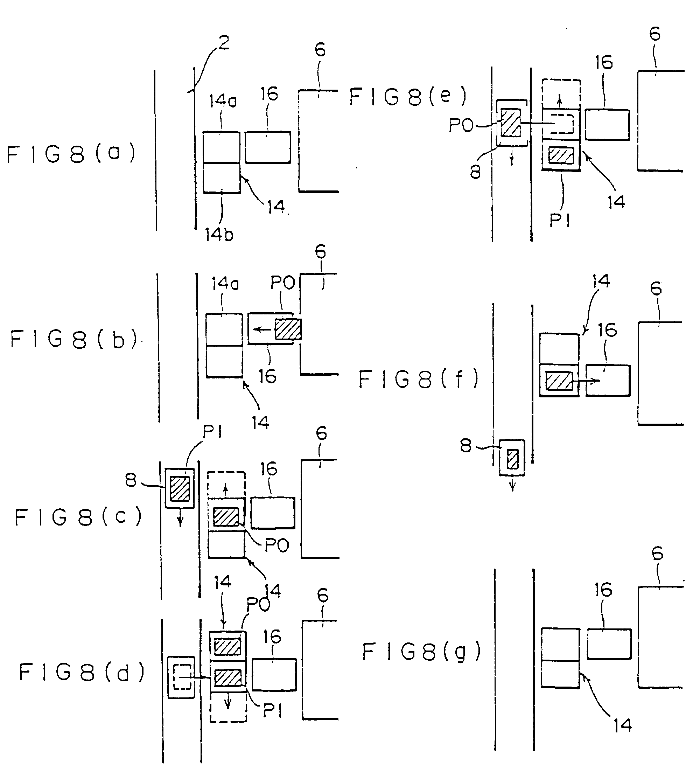

The following description is now provided about the operation of the buffer mechanism in this embodiment with reference to Figs. 8(a) to 8(g).

Fig. 8(a) illustrates an initial state in which the first conveyor 14a of the parting conveyor 14 is aligned with the stock conveyor 16 and is placed in the product reception/delivery position. As shown in Fig. 8(b), a product PO for delivery is carried out from the warehouse 6 and is then conveyed by the stock conveyor 16 and put onto the first conveyor 14a of the parting conveyor 14. At this time, the carrier 8 which carries thereon a product PI for warehousing arrives in front of the buffer mechanism 12, as shown in Fig. 8(c). When the carrier 8 transmits the arrival signal RCH to the buffer mechanism, the parting conveyor 14 is moved to the second position to retract the product PO for delivery, whereby the product PI for warehousing on the carrier 8 is transferred onto the second conveyor 14b of the parting conveyor 14, as shown in Fig. 8(d).

Thereafter, for quick delivery of the product PO onto the carrier 8, the parting conveyor 14 is again moved as indicated by arrow in Fig. 8(d) and the first conveyor 14a occupies the product reception/delivery position. As a result, the product PO for delivery is transferred onto the carrier 8 from the first conveyor 14a and the work end signal END is issued to the carrier 8 from the buffer mechanism 12, whereupon the carrier starts the conveyance of the product PO.

Since the product PI for warehousing may be handled relatively slowly, the parting conveyor 14 is drived to the second position and the product PI on the second conveyor 14b is carried into the warehouse 6 through the stock conveyor 16, as shown in Fig. 8(f). Then, the parting conveyor 14 is driven to the first position shown in Fig. 8(g). Now, a series of operations are over.

In the case where the product PI for warehousing and the product PO for delivery are not in concurrence with each other on the buffer mechanism 12, the parting conveyor 14 is held in the first position and there are performed warehousing and delivery of the products.

### INDUSTRIAL APPLICABILITY

According to the automatic product conveying system of the present invention, it is possible to effect the unloading of product from the carrier to a work station or the loading of product from the work station to the carrier without causing collision of the products with each other by a construction having a simple communication apparatus and using a single station conveyor, not requiring linking between the carrier control system and the station conveyor control system. Since the communication between the carrier and the station conveyor is realized by a very simple construction, the cost can be kept low and it is easy to increase the number of such station conveyor.

Further, between the warehouse and the conveyance path there is provided a buffer mechanism having a parting conveyor capable of moving between first and second positions, so in the event of concurrence of a product for warehousing and a product for delivery, the product for delivery can be carried out rapidly while avoiding collision of both products, whereby the delay in the delivery of product from the warehouse can be prevented and hence the ability of each work station can be exhibited to the utmost.

## Claims

1. An automatic product conveying system for conveying products between a plurality of work stations (4a, 4b, 4c) and a product warehouse (6), comprising:
an annular conveyance path (2) formed along the work stations (4a, 4b, 4c) and the product warehouse (6),
a carrier (8) for conveying products along the annular conveyance path (2);
station conveyor means (10) disposed between the work stations (4a, 4b, 4c) and the conveyance path (2) to convey products from the work stations to the carrier (8) or from the carrier (8) to the work stations;
first control means (20) for controlling the operation of the station conveyor means (10);
buffer means (12) disposed between the product warehouse (6) and the conveyance path (2) for the reception and delivery of products between the warehouse (6) and the carrier (8),
first communication means for the communication of information on the loading and unloading of products between the carrier (8) and the station conveyor means (10);
second communication means for the communication of information on the loading and unloading of products between the carrier (8) and the buffer means (12);
first detector means (22) for detecting the presence of product on the station conveyor means (10); and
second detector means for detecting the presence of product unloaded onto the station conveyor means (10) from the carrier (8).

2. An automatic product conveying system according to claim 1, wherein said first communication means comprises first and second light emitting elements (24a, 24b) provided on the carrier (8) and producing an unloading request signal and a loading request signal, respectively; first and second light sensing elements (26a, 26b) provided on the station conveyor means (10) and receiving said unloading request signal and loading request signal, respectively; a third light emitting element (24c) provided on the station conveyor means (10) and producing an unloading OK signal in accordance with said unloading request signal when there is no product on the station conveyor means (10); a fourth light emitting element (24d) provided on the station conveyor means (10) and producing a loading OK signal in accordance with said loading request signal when the presence of product has been detected by the first detector means and the presence of unloaded product not detected by the second detector means; and third and fourth light sensing elements (26c, 26d) provided on the carrier (8) and receiving said unloading OK signal and loading OK signal, respectively.

3. An automatic product conveying system according to claim 1, wherein said buffer means (12) comprises first conveyor means (14) for conveying products to the carrier (8) and having first and second conveyors (14a, 14b) disposed in parallel with each other, the first conveyor means (14) being capable of moving between a first position in which the first conveyor (14a) occupies a predetermined product loading/unloading position and a second position in which the second conveyor (14b) occupies said predetermined product loading/unloading position; second conveyor means (16) for the reception and delivery of products between the first conveyor means (14) and the warehouse (6); and second control means (30) for controlling the operations of the first and second conveyor means (14, 16).

4. An automatic product conveying system according to claim 3, further including a host computer (18) for the control of delivery from and warehousing into the product warehouse (6); means for transmitting a delivery command signal and a warehousing command signal from the host computer (18) to the buffer means (12); third and fourth detector means for respectively detecting the presence of product for delivery and product for warehousing on the buffer means (12); and means for transmitting from the buffer means (12) to the host computer (18) a delivery product presence signal and a warehousing product presence signal upon detection of signals provided by said third and fourth detector means.

5. An automatic product conveying system according to claim 4, wherein said second communication means transmits to the buffer means (12) an arrival signal (RCH) indicating that the carrier (8) has arrived at the front of the buffer means (12) and also transmits to the carrier (8) a work end signal (END) indicating that the buffer means (12) has loaded the product for delivery onto the carrier (8).

## Patentansprüche

1. Automatisches Produkttransportsystem zum Transportieren von Produkten zwischen einer Vielzahl von Arbeitsstationen (4a, 4b, 4c) und einem Produktlager (6), mit:
einem ringförmigen Transportpfad (2), der entlang den Arbeitsstationen (4a, 4b, 4c) und dem Produktlager (6) gebildet ist,
einem Träger (8) zum Transportieren von Produkten entlang dem ringförmigen Transportpfad (2);
Stationsfördermitteln (10), die zwischen den Arbeitsstationen (4a, 4b, 4c) und dem Transportpfad (2) angeordnet sind, um Produkte von den Arbeitsstationen zu dem Träger (8) oder von dem Träger (8) zu den Arbeitsstationen zu transportieren;
ersten Steuerungseinrichtungen (20) zum Steuern des Betriebs der Stationsfördermittel (10);
Puffereinrichtungen (12), die zwischen dem Produktlager (6) und dem Transportpfad (2) angeordnet sind, für den Empfang und die Auslieferung von Produkten zwischen dem Lager (6) und dem Träger (8),
ersten Kommunikationseinrichtungen für die Kommunikation von Information über das Beladen und Entladen von Produkten zwischen dem Träger (8) und den Stationsfördermitteln (10);
zweiten Kommunikationseinrichtungen für die Kommunikation von Information über das Beladen und Entladen von Produkten zwischen dem Träger (8) und den Puffereinrichtungen (12);
ersten Detektoreinrichtungen (22) zum Erfassen des Vorhandenseins eines Produktes auf den Stationsfördermitteln (10); und
zweiten Detektoreinrichtungen zum Erfassen des Vorhandenseins eines Produktes, das von dem Träger (8) auf die Stationsfördermittel (10) entladen worden ist.

2. Automatisches Produkttransportsystem nach Anspruch 1, dadurch gekennzeichnet, daß die erste Kommunikatonseinrichtung erste und zweite lichtemittierende Elemente (24a, 24b) umfaßt, die auf dem Träger (8) vorgesehen sind und ein Entladeanforderungssignal bzw. ein Beladeanforderungssignal erzeugen; erste und zweite Lichtsensorelement (26a, 26b), die auf den Stationsfördermitteln (10) vorgesehen sind und das Entladeanforderungssignal bzw. das Beladeanforderungssignal empfangen; ein drittes lichtemittierendes Element (24c), das auf den Stationsfördermitteln (10) vorgesehen ist und ein Entlade-OK-Signal in Übereinstimmung mit dem Entladeanforderungssignal erzeugt, wenn kein Produkt auf den Stationsfördermitteln (10) ist; ein viertes lichtemittierendes Element (24d), das auf den Stationsfördermittel (10) vorgesehen ist und ein Belade-OK-Signal in Übereinstimmung mit dem Beladeanforderungssignal erzeugt, wenn das Vorhandensein eines Produktes von der ersten Detektoreinrichtung erfaßt worden ist, und das Vorhandensein eines entladenen Produktes von der zweiten Detektoreinrichtung nicht erfaßt worden ist; und dritte und vierte Lichtsensorelemente (26c, 26d), die auf dem Träger (8) vorgesehen sind und das Entlade-OK-Signal bzw. das Belade-OK-Signal empfangen.

3. Automatisches Produkttransportsystem nach Anspruch 1, dadurch gekennzeichnet, daß die Puffereinrichtung (12) erste Fördermittel (14) zum Transportieren von Produkten zu dem Träger (8) umfaßt und erste und zweite Transporter (14a, 14b) aufweist, die parallel zueinander angeordnet sind, wobei das erste Fördermittel (14) in der Lage ist, sich zwischen einer ersten Position zu bewegen, in welcher der erste Transporter (14a) eine vorbestimmte Produktbelade-/Entladeposition belegt, und einer zweiten Position, in welcher der zweite Transporter (14b) die vorbestimmte Produktbelade-/Entladeposition belegt; zweite Fördermittel (16) für den Empfang und die Auslieferung von Produkten zwischen den ersten Fördermitteln (14) und dem Lager (6); und zweiten Steuereinrichtungen (30) zum Steuern des Betriebs der ersten und zweiten Fördermittel (14, 16).

4. Automatisches Produkttransportsystem nach Anspruch 3, gekennzeichnet durch einen Host-Computer (18) für die Steuerung der Auslieferung aus und dem Lagern in das Produktlager (6); Einrichtungen zum Übertragen eines Auslieferungsbefehlssignals und eines Lagerbefehlssignals von dem Host-Computer (18) an die Puffereinrichtung (12); dritten und vierten Detektoreinrichtungen jeweils zum Erfassen des Vorhandenseins eines Produkts zur Auslieferung und eines Produkts zum Lagern auf der Puffereinrichtung (12); und Einrichtungen zum Übertragen eines Signals, daß ein Auslieferungsprodukt vorhanden ist, und eines Signals, daß ein Produkt zum Lagern vorhanden ist, von der Puffereinrichtung (12) an den Host-Computer (18) nach der Erfassung von Signalen, die von den dritten und vierten Detektoreinrichtungen bereitgestellt werden.

5. Automatisches Produkttransportsystem nach Anspruch 4, dadurch gekennzeichnet, daß die zweite Kommunikationseinrichtung an die Puffereinrichtung (12) ein Ankunftsignal (RCH) überträgt, welches anzeigt, daß der Träger (8) vor der Puffereinrichtung (12) angekommen ist, und ebenfalls an den Träger (8) ein Arbeitsendesignal (END) überträgt, welches anzeigt, daß die Puffereinrichtung (12) das Produkt zur Auslieferung auf den Träger (8) geladen hat.

## Revendications

1. Système automatique de transport de marchandise pour transporter des marchandises entre plusieurs postes de travail (4a, 4b, 4c) et un entrepôt (6) à marchandises, comprenant:
un parcours annulaire de transport (2) formé entre les postes de travail (4a, 4b, 4c) et l'entrepôt (6) à marchandises,
un chariot (8) pour transporter des marchandises le long du parcours annulaire de transport (2);
des moyens convoyeurs (10) de poste, disposés entre les postes de travail (4a, 4b, 4c) et le parcours de transport (2) pour transporter des marchandises depuis les postes de travail jusqu'au chariot (8), ou depuis le chariot (8) jusqu'aux postes de travail;
un premier moyen de commande (20) pour commander le fonctionnement des moyens convoyeurs (10) de poste;
un moyen tampon (12) disposé entre l'entrepôt (6) à marchandises et le parcours de transport (2), pour la réception et la fourniture de marchandise entre l'entrepôt (6) et le chariot (8),
un premier moyen de communication, pour la communication d'information concernant le chargement et le déchargement de marchandise entre le chariot (8) et les moyens convoyeurs (10) de poste;
un deuxième moyen de communication, pour la communication d'information concernant le chargement et le déchargement de marchandise entre le chariot (8) et le moyen tampon (12);
un premier moyen à détecteur (22) pour détecter la présence de marchandise sur les moyens convoyeurs (10) de poste; et
un deuxième moyen à détecteur pour détecter la présence de marchandise déchargée sur les moyens convoyeurs (10) de poste depuis le chariot (8).

2. Système automatique de transport de marchandise selon la revendication 1, dans lequel ledit premier moyen de communication comprend un premier et un deuxième élément émetteur de lumière (24a, 24b) prévus sur le chariot (8) et produisant respectivement un signal de demande de déchargement et un signal de demande de chargement; un premier et un deuxième élément détecteur (26a, 26b) prévus sur les moyens convoyeurs (10) de poste et recevant respectivement ledit signal de demande de déchargement et ledit signal de demande de chargement; un troisième moyen émetteur de lumière (24c) prévu sur les moyens convoyeurs (10) de poste et produisant un signal d'accord de déchargement en accord avec ledit signal de demande de déchargement lorsqu'il n'y a pas de marchandise sur le moyen convoyeur (10) de poste; un quatrième élément émetteur de lumière (24d) prévu sur les moyens convoyeurs (10) de poste et produisant un signal d'accord de chargement en accord avec ledit signal de demande de chargement lorsque la présence de marchandise a été détectée par le premier -moyen à détecteur et que la présence de marchandise déchargée n'a pas été détectée par le deuxième moyen à détecteur; et un troisième et un quatrième éléments détecteurs de lumière (26c, 26d) prévus sur le chariot (8) et recevant respectivement ledit signal d'accord de déchargement et ledit signal d'accord de chargement.

3. Système automatique de transport de marchandise selon la revendication 1, dans lequel ledit moyen tampon (12) comprend un premier moyen convoyeur (14), pour transporter des marchandises sur le chariot (8), et présentant un premier et un deuxième convoyeur (14a, 14b) disposés en parallèle l'un à l'autre, le premier moyen convoyeur (14) étant capable de se déplacer entre une première position dans laquelle le premier convoyeur (14a) occupe une position prédéterminée de chargement/déchargement de marchandise, et une deuxième position dans laquelle le deuxième convoyeur (14b) occupe ladite position prédéterminée de chargement/déchargement de marchandise; un deuxième moyen convoyeur (16) pour la réception et la fourniture de marchandise entre le premier moyen convoyeur (14) et l'entrepôt (6); et un deuxième moyen de commande (30) pour commander le fonctionnement du premier et du deuxième moyens convoyeurs (14, 16).

4. Système automatique de transport de marchandise selon la revendication 3, comprenant en outre un ordinateur-hôte (18) pour la commande de la fourniture depuis l'entrepôt (6), et de l'entreposage dans l'entrepôt (6) à marchandises; un moyen pour transmettre au moyen tampon (12) un signal de commande de fourniture et un signal de commande d'entreposage depuis l'ordinateur-hôte (18); un troisième et un quatrième moyens à détecteurs, pour respectivement détecter sur le moyen tampon (12) la présence de marchandise à fournir et de marchandise à entreposer; et un moyen pour transmettre depuis le moyen à tampon (12) jusqu'à l'ordinateur-hôte (18) un signal de présence de marchandise à fournir et un signal de présence de marchandise à entreposer lors de la détection de signaux fournis par ledit troisième et ledit quatrième moyens à détecteurs.

5. Système automatique de transport de marchandise selon la revendication 4, dans lequel ledit deuxième moyen de communication transmet au moyen tampon (12) un signal d'arrivée (RCH) indiquant que le chariot (8) est arrivé devant le moyen tampon (12), et transmet également au chariot (8) un signal de fin de tâche (END) indiquant que le moyen tampon (12) a chargé sur le chariot (8) la marchandise à fournir.
